# EUROPÄISCHE PATENTSCHRIFT

(11) **EP 3 598 550 B1**
(45) Veröffentlichungstag und Bekanntmachung des Hinweises auf die Patenterteilung: **23.08.2023**
(21) Anmeldenummer: 19186407.3
(22) Anmeldetag: 16.07.2019
(51) Int. Cl.: H01M 8/04007

(54) **BRENNSTOFFZELLEN-ANORDNUNG MIT NUTZUNG VON ABWÄRME**
FUEL CELL ARRANGEMENT WITH HEAT UTILIZATION
ARRANGEMENT D'UNE PILE À COMBUSTIBLE À UTILISATION DE LA CHALEUR DÉGAGÉE

(30) Priorität: 18.07.2018 DE 102018211992
(43) Veröffentlichungstag der Anmeldung: 22.01.2020
(73) Patentinhaber: Siemens Mobility GmbH, 81739 München (DE)
(72) Erfinder: PEYMANDAR, De-Niang Maria, 91468 Gutenstetten (DE)
(74) Vertreter: Siemens Patent Attorneys

(56) Entgegenhaltungen:
- EP-A1- 2 463 945
- DE-A1-102013 103 949
- US-A1- 2016 257 180

## Beschreibung

Die Erfindung betrifft eine Brennstoffzellen-Anordnung, bei der die von einer Brennstoffzelle erzeugte Wärme als Abwärme abgeführt wird.

In einer Brennstoffzelle einer Brennstoffzellen-Anordnung erfolgt eine chemische Reaktion zwischen Wasserstoff und Sauerstoff. Dabei handelt es sich um eine exotherme Reaktion in der Brennstoffzelle, durch die Wärme erzeugt wird. Die erzeugte Wärme ist von der Brennstoffzellen-Leistung abhängig. Bei einem 200 kW-Brennstoffzellen-System kann Wärmeleistung bis zirka 300 kW erzeugt werden. In den meisten Fällen wird die erzeugte Wärme als Abwärme abgeführt und unverbraucht in die Umgebung abgegeben.

DE 10 2013 103949 offenbart eine mobile Arbeitsmaschine mit Brennstoffzelle, Batterie und thermoelektrischem Element, bei der Abwärme einer Brennstoffzelle in einem thermoelektrischen Generator zur Erzeugung von elektrischer Energie genutzt wird, die in einer Batterie gespeichert wird.

Ein Anliegen der vorliegenden Erfindung ist es, eine Brennstoffzellen-Anordnung mit Nutzung von Abwärme bereitzustellen, sodass die von einer Brennstoffzelle der Brennstoffzellen-Anordnung erzeugte Wärme zur Energieerzeugung genutzt werden kann.

Eine Brennstoffzellen-Anordnung mit Nutzung von Abwärme ist im Patentanspruch 1 angegeben.

Gemäß einer Ausführungsform umfasst die Brennstoffzellen-Anordnung mindestens eine Brennstoffzelle, die im Betrieb elektrische Energie und Wärme erzeugt. Des Weiteren umfasst die Brennstoffzellen-Anordnung eine Generatoreinrichtung mit mindestens einem thermoelektrischen Generator. Die Generatoreinrichtung ist in der Brennstoffzellen-Anordnung derart angeordnet, dass der mindestens eine thermoelektrische Generator aus der von der mindestens einen Brennstoffzelle erzeugten Wärme eine elektrische Energie erzeugt. Darüber hinaus umfasst die Brennstoffzellen-Anordnung eine Batterie zur Speicherung der von dem mindestens einen thermoelektrischen Generator erzeugten elektrischen Energie.

Durch den Einsatz der Generatoreinrichtung mit dem mindestens einen thermoelektrischen Generator kann zumindest ein Teil der in der mindestens einen Brennstoffzelle erzeugten Wärme in elektrische Energie umgewandelt werden. Die elektrische Energie kann in der Batterie gespeichert werden. Durch den Einsatz der Batterie und die Speicherung der elektrischen Energie in der Batterie kann die mindestens eine Brennstoffzelle autark betrieben werden, indem die gespeicherte elektrische Energie zum Betreiben der mindestens einen Brennstoffzelle genutzt wird.

Die in der Batterie gespeicherte elektrische Energie kann zum Beispiel für den Betrieb von Brennstoffzellen-Subkomponenten, die zum bestimmungsgemäßen Betrieb der mindestens einen Brennstoffzelle notwendig sind, verwendet werden. Gemäß einer weiteren Ausführungsform kann die in der Batterie gespeicherte elektrische Energie für den Betrieb von elektrischen Komponenten eines Fahrzeugs, in dem die Brennstoffzellen-Anordnung vorgesehen ist, verwendet werden.

Die Brennstoffzellen-Anordnung ist in einem schienenbetriebenen Fahrzeug, insbesondere einem Zug, vorgesehen.

Die Kühlung der thermoelektrischen Generatoren kann zum Beispiel durch die Kühlanlage des schienenbetriebenen Fahrzeugs gewährleistet sein. Außerdem kann die geladene Batterie als Redundanz zu einer Bordnetzbatterie des schienenbetriebenen Fahrzeugs verwendet werden. Sicherheitsrelevante Beleuchtungen können bei Ausfall der Bordnetzbatterie durch die Redundanzbatterie bedient werden. Beim Einsatz der Brennstoffzellen-Anordnung im Zug kann die in der Batterie gespeicherte elektrische Energie beispielsweise für den Betrieb von HBUs (Hilfsbetriebeumrichtern) des Zugs verwendet werden.

Der mindestens eine thermoelektrische Generator ist dazu ausgebildet, durch den Seebeck-Effekt Wärmeenergie, die von der mindestens einen Brennstoffzelle als Abwärme abgeführt wird, in elektrische Energie umzuwandeln. Der mindestens eine thermoelektrische Generator umfasst Halbleiter, dessen Kontakte unterschiedlichen Temperaturen ausgesetzt sind. Beispielsweise kann eine Seite der Halbleiter von der Abwärme der mindestens einen Brennstoffzelle umströmt sein, während die andere Seite des Halbleiters von einem Kühlmittel umströmt wird. Durch den Temperaturunterschied auf beiden Seiten des thermoelektrischen Generators wird eine Thermospannung erzeugt.

Bei geschlossenem Stromkreis fließt durch die erzeugte Thermospannung ein Strom. Dieser Strom kann als Ladestrom der Batterie der Brennstoffzellen-Anordnung zugeführt werden, sodass in der Batterie elektrische Energie gespeichert wird. Die von der Batterie zur Verfügung gestellte elektrische Energie kann dann zum Betreiben von Subkomponenten des Zuges und/oder der mindestens einen Brennstoffzelle weiterverwendet werden.

Die Erfindung wird im Folgenden anhand von Figuren, die Ausführungsbeispiele der Brennstoffzellen-Anordnung beziehungsweise von Komponenten der Brennstoffzellen-Anordnung zeigen, näher erläutert.

Es zeigen:
Figur 1 eine Ausführungsform einer Brennstoffzellen-Anordnung mit Nutzung von Abwärme, die beim Betrieb der Brennstoffzellen-Anordnung erzeugt wird, und
Figur 2 eine Ausführungsform einer Anordnung von thermoelektrischen Generatoren einer Generatoreinrichtung einer Brennstoffzellen-Anordnung zur Nutzung von Abwärme, die beim Betrieb der Brennstoffzellen-Anordnung erzeugt wird.

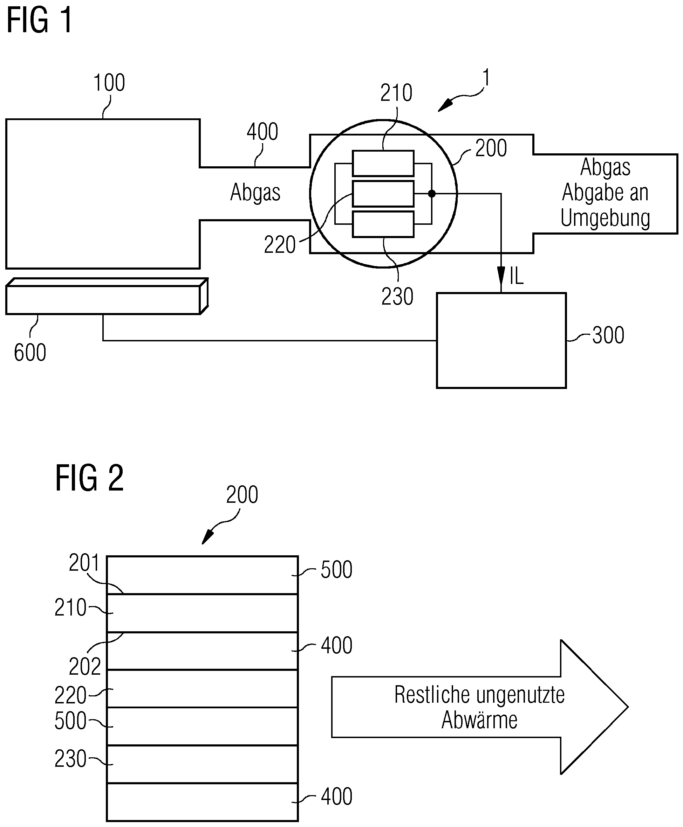

Die in Figur 1 gezeigte Brennstoffzellen-Anordnung 1 mit Nutzung von Abwärme zur Energieerzeugung umfasst mindestens eine Brennstoffzelle 100, die im Betrieb elektrische Energie und Wärme erzeugt. Darüber hinaus umfasst die Brennstoffzellen-Anordnung 1 eine Generatoreinrichtung 200 mit mindestens einem thermoelektrischen Generator 210. Die Generatoreinrichtung 200 ist in der Brennstoffzellen-Anordnung 1 derart angeordnet, dass der mindestens eine thermoelektrische Generator 210 aus der von der mindestens einen Brennstoffzelle 100 erzeugten Wärme eine elektrische Energie erzeugt. Die Brennstoffzellen-Anordnung 1 umfasst darüber hinaus eine Batterie 300 zur Speicherung der von dem mindestens einen thermoelektrischen Generator 210 erzeugten elektrischen Energie.

Gemäß der in Figur 1 gezeigten Ausführungsform umfasst die Brennstoffzellen-Anordnung 1 eine Zuführungsleitung 400 zur Zuführung der von der mindestens einen Brennstoffzelle 100 erzeugten Wärme zu der Generatoreinrichtung 200. Die Zuführungsleitung 400 ist derart zwischen der mindestens einen Brennstoffzelle 100 und der Generatoreinrichtung 200 angeordnet, dass die von der mindestens einen Brennstoffzelle 100 erzeugte Wärme dem mindestens einen thermoelektrischen Generator 210 zur Umwandlung in elektrische Energie unmittelbar zugeführt wird.

Zwischen der mindestens einen Brennstoffzelle 100 und der Generatoreinrichtung 200 beziehungsweise dem mindestens einen thermoelektrischen Generator 210 ist somit kein Wärmespeicher zur Zwischenspeicherung der thermischen Energie/Abwärme der mindestens einen Brennstoffzelle angeordnet. Stattdessen verbindet die Zuführungsleitung 400 die mindestens eine Brennstoffzelle 100 direkt mit der Generatoreinrichtung 200 beziehungsweise dem mindestens einen thermoelektrischen Generator 210. Die von der mindestens einen Brennstoffzelle erzeugte Wärme kann somit direkt als Abwärme dem mindestens einen thermoelektrischen Generator 210 zugeführt werden, der die Wärmeenergie in elektrische Energie umwandelt. Die Abwärme kann beispielsweise durch Wasser erzeugt werden, das durch die chemische Reaktion in der mindestens einen Brennstoffzelle erzeugt und dabei erwärmt worden ist.

Gemäß einer möglichen Ausführungsform umfasst die Brennstoffzellen-Anordnung 1 einen Ausgangsanschluss A200 zum Erzeugen einer Thermospannung. Der mindestens eine thermoelektrische Generator 210 ist dazu ausgebildet, in Abhängigkeit von der Wärme, die von der mindestens einen Brennstoffzelle 100 erzeugt wird, an dem Ausgangsanschluss A200 die Thermospannung zu erzeugen. Der Ausgangsanschluss A200 der Generatoreinrichtung 200 ist mit der Batterie 300 verbunden.

Gemäß einer möglichen Ausführungsform der Brennstoffzellen-Anordnung 1 ist die Generatoreinrichtung 200 dazu ausgebildet, in Abhängigkeit von der Wärme, die von der mindestens einen Brennstoffzelle 100 erzeugt wird, einen Ladestrom IL zum Laden der Batterie 300 zu erzeugen.

Die Generatoreinrichtung 200 kann eine Vielzahl des mindestens einen thermoelektrischen Generators 210 aufweisen. Im dargestellten Ausführungsbeispiel der Figur 1 umfasst die Generatoreinrichtung 200 beispielsweise die thermoelektrischen Generatoren 210, 220 und 230. Um eine hohe Energieausbeute zu erzielen, können die thermoelektrischen Generatoren 210, 220 und 230 in Serie geschaltet sein.

Die Batterie 300 ist mit einer elektrischen Komponente 600 der Brennstoffzellen-Anordnung 1 verbunden .

Die elektrische Komponente 600 kann beispielsweise zum Betreiben der mindestens einen Brennstoffzelle 100 im bestimmungsgemäßen Betrieb ausgebildet sein.

Durch die Umwandlung der Wärmeenergie der Brennstoffzelle in elektrische Energie und dessen Speicherung in der Batterie können Brennstoffzellen-Subkomponenten durch die zusätzlich zur Verfügung stehende Energie betrieben werden. Die Brennstoffzellen-Subkomponenten können beispielsweise ein Luftkompressor, ein Wasserstoffrezirkulationsgebläse oder ein Befeuchter sein.

Gemäß einer weiteren möglichen Ausführungsform kann die elektrische Komponente 600 ebenfalls eine Subkomponente der Brennstoffzelle 100 sein. Die elektrische Komponente 100 ist zum Erwärmen der mindestens einen Brennstoffzelle 100 auf eine Betriebstemperatur zum bestimmungsgemäßen Betreiben der mindestens einen Brennstoffzelle ausgebildet. Figur 1 verdeutlicht beispielsweise eine Ausführungsform der Brennstoffzellen-Anordnung 1, bei der die elektrische Komponente 600 als ein Wärmekissen zum Aufwärmen der mindestens einen Brennstoffzelle 100 auf eine Betriebstemperatur ausgebildet ist.

Die von der Brennstoffzelle 100 erzeugte Abwärme kann durch Umwandlung in elektrische Energie somit zum bestimmungsgemäßen Betreiben der Brennstoffzelle verwendet werden. Die vorgeschlagene Brennstoffzellen-Anordnung 1 mit Umwandlung der Abwärme der mindestens einen Brennstoffzelle 100 in elektrische Energie ermöglicht insbesondere das autarke Betreiben von Brennstoffzellen der Brennstoffzellen-Anordnung.

Figur 2 zeigt eine mögliche Ausführungsform der Generatoreinrichtung 200 mit mehreren thermoelektrischen Generatoren 210, 220 und 230. Jeder der thermoelektrischen Generatoren 210, 220 und 230 ist auf einer ersten Seite 201 von einer Kühlmittelleitung 500, in der ein Kühlmittel strömt, und auf einer gegenüberliegenden zweiten Seite 202 von der Zuführungsleitung 400 zur Führung der Abwärme beziehungsweise des Abgases der mindestens einen Brennstoffzelle 100 umgeben. Somit wird die jeweilige erste Seite 201 der thermoelektrischen Generatoren von dem Kühlmittel angeströmt und die gegenüberliegende zweite Seite 202 wird von der Abwärme beziehungsweise dem Abgas der mindestens einen Brennstoffzelle angeströmt.

Die Generatoreinrichtung 200 ist dazu ausgebildet, in Abhängigkeit von einer Temperaturdifferenz zwischen der ersten Seite 201 und der zweiten Seite 202 der thermoelektrischen Generatoren 210, 220 und 230 an dem Ausgangsanschluss A200 der Generatoreinrichtung 200 die Thermospannung zu erzeugen. Je höher die Temperaturdifferenz zwischen der ersten Seite 201 und der zweiten Seite 202 jedes der thermoelektrischen Generatoren ist, desto höher ist die an dem Ausgangsanschluss A200 der Generatoreinrichtung 200 erzeugte Thermospannung und desto höher ist auch der Ladestrom IL zum Laden der Batterie 300.

Die in Figur 1 gezeigte Brennstoffzellen-Anordnung 1 wird in einem schienenbetriebenen Fahrzeug, beispielsweise einem Zug, eingesetzt. Die Kühlmittelleitung 500 kann dann beispielsweise die Kühlmittelleitung des Zuges sein. Die Brennstoffzellen-Anordnung 1 kann in dem schienenbetriebenen Fahrzeug insbesondere zum Betreiben von einer elektrischen Einrichtung des schienenbetriebenen Fahrzeugs ausgebildet sein. Beispielsweise kann die in der Batterie 300 der Brennstoffzellen-Anordnung 1 gespeicherte elektrische Energie zur Unterstützung der elektrischen Energieversorgung von Hilfsbetriebeumrichtern (HBUs) des schienenbetriebenen Fahrzeugs verwendet werden. Zu den Hilfsbetriebeumrichtern gehört beispielsweise eine Bordnetzbatterie, mit dessen elektrischer Energie zum Beispiel eine Notbeleuchtung des Zuges versorgt werden kann. Die in der Batterie 300 der Brennstoffzellen-Anordnung 1 gespeicherte elektrische Energie kann der Bordnetzbatterie des schienenbetriebenen Fahrzeugs zugeführt werden. Durch die zusätzlich von der Brennstoffzellen-Anordnung erzeugte elektrische Energie können Notfunktionen eines Zuges unterstützt werden. Gemäß einer Weiterbildung kann ein Teil der Abwärme der mindestens einen Brennstoffzelle 100, der nicht durch die Generatoreinrichtung 200 in elektrische Energie umgewandelt wird, in die Fahrgastkabine eines Fahrzeugs umgeleitet werden. Im Bahnbetrieb kann somit ein Anteil der von der mindestens einen Brennstoffzelle erzeugte Abwärme, der nicht zur elektrischen Energieerzeugung genutzt wird, zur Beheizung der Fahrgastkabine eines Zuges verwendet werden.

Die Erfindung ist durch die oben angegebenen bevorzugten Ausführungsformen näher beschrieben. Es wird darauf hingewiesen, dass die Erfindung jedoch nicht auf diese Ausführungsbeispiele beschränkt ist. Stattdessen können von einem Fachmann aus den Ausführungsbeispielen andere Varianten abgeleitet werden, ohne den Schutzumfang der beanspruchten Erfindung zu verlassen.

### Bezugszeichenliste

- 1: Brennstoffzellen-Anordnung
- 100: Brennstoffzelle
- 200: Generatoreinrichtung
- 210, 220, 230: thermoelektrischer Generator
- 300: Batterie
- 400: Zuführungsleitung
- 500: Kühlmittelleitung
- 600: elektrische Komponente der Brennstoffzellen-Anordnung

## Patentansprüche

1. Schienenbetriebenes Fahrzeug, mit einer Brennstoffzellen-Anordnung (1) zum Betreiben von einer elektrischen Einrichtung des schienenbetriebenen Fahrzeugs und mit Nutzung von Abwärme, wobei die Brennstoffzellen-Anordnung umfasst:
- mindestens eine Brennstoffzelle (100), die im Betrieb elektrische Energie und Wärme erzeugt,
- eine Generatoreinrichtung (200) mit mindestens einem thermoelektrischen Generator (210), wobei die Generatoreinrichtung (200) in der Brennstoffzellen-Anordnung (1) derart angeordnet ist, dass der mindestens eine thermoelektrische Generator (210) aus der von der mindestens einen Brennstoffzelle (100) erzeugten Wärme eine elektrische Energie erzeugt,
- eine Batterie (300) zur Speicherung der von dem mindestens einen thermoelektrischen Generator (210) erzeugten elektrischen Energie,
- wobei die Batterie (300) mit einer elektrischen Komponente (600) der Brennstoffzellen-Anordnung (1) verbunden ist,
- wobei die elektrische Komponente (600) zum Erwärmen der mindestens einen Brennstoffzelle (100) auf eine Betriebstemperatur der mindestens einen Brennstoffzelle ausgebildet ist, um die mindestens eine Brennstoffzelle (100) im bestimmungsgemäßen Betrieb zu betreiben.

2. Schienenbetriebenes Fahrzeug nach Anspruch 1, wobei die Brennstoffzellen-Anordnung (1) umfasst:
- eine Zuführungsleitung (400) zur Zuführung der von der mindestens einen Brennstoffzelle (100) erzeugten Wärme zu der Generatoreinrichtung (200),
- wobei die Zuführungsleitung (400) derart zwischen der mindestens einen Brennstoffzelle (100) und der Generatoreinrichtung (200) angeordnet ist, dass die von der mindestens einen Brennstoffzelle (100) erzeugte Wärme dem mindestens einen thermoelektrischen Generator (210) zur Umwandlung in elektrische Energie unmittelbar zugeführt wird.

3. Schienenbetriebenes Fahrzeug nach einem der Ansprüche 1 oder 2,
- wobei die Generatoreinrichtung (200) einen Ausgangsanschluss (A200) zum Erzeugen einer Thermospannung aufweist,
- wobei der mindestens eine thermoelektrische Generator (210) in Abhängigkeit von der von der mindestens einen Brennstoffzelle (100) erzeugten Wärme an dem Ausgangsanschluss (A200) die Thermospannung erzeugt.

4. Schienenbetriebenes Fahrzeug nach Anspruch 3,
wobei der Ausgangsanschluss (A200) der Generatoreinrichtung (200) mit der Batterie (300) verbunden ist.

5. Schienenbetriebenes Fahrzeug nach einem der Ansprüche 1 bis 4,
wobei die Generatoreinrichtung (200) dazu ausgebildet ist, in Abhängigkeit von der von der mindestens einen Brennstoffzelle (100) erzeugten Wärme einen Ladestrom (IL) zum Laden der Batterie (300) zu erzeugen.

6. Schienenbetriebenes Fahrzeug nach einem der Ansprüche 2 bis 5,
wobei die Generatoreinrichtung (200) derart ausgebildet ist, dass der mindestens eine thermoelektrische Generator (210) auf einer ersten Seite (201) von einer Kühlmittelleitung (500) zur Führung eines Kühlmittels und auf einer gegenüberliegenden zweiten Seite (202) von der Zuführungsleitung (400) umgeben ist.

7. Schienenbetriebenes Fahrzeug nach Anspruch 6,
wobei die Generatoreinrichtung (200) dazu ausgebildet ist, die Thermospannung an dem Ausgangsanschluss (A200) in Abhängigkeit von einer Temperaturdifferenz zwischen der ersten Seite (201) und zweiten Seite (202) des mindestens einen thermoelektrischen Generators (210) zu erzeugen.

8. Schienenbetriebenes Fahrzeug nach einem der Ansprüche 1 bis 7,
- wobei die Generatoreinrichtung (200) eine Vielzahl des mindestens einen thermoelektrischen Generators (210, 220, 230) aufweist,
- wobei die thermoelektrischen Generatoren (210, 220, 230) in Serie geschaltet sind.

9. Schienenbetriebenes Fahrzeug nach Anspruch 1,
wobei die Kühlmittelleitung (500) als eine Kühlmittelleitung des Schienenbetriebenes Fahrzeugs ausgebildet ist.

10. Schienenbetriebenes Fahrzeug nach Anspruch 1,
wobei die in der Batterie (300) der Brennstoffzellen-Anordnung (1) gespeicherte elektrische Energie zur Unterstützung der elektrischen Energieversorgung von Hilfsbetriebeumrichtern des schienenbetriebenen Fahrzeugs verwendet wird.

11. Schienenbetriebenes Fahrzeug nach einem der Ansprüche 1 oder 10,
wobei die in der Batterie (300) der Brennstoffzellen-Anordnung (1) gespeicherte elektrische Energie einer Bordnetzbatterie des schienenbetriebenen Fahrzeugs zugeführt wird.

## Claims

1. Rail-operated vehicle, having a fuel cell arrangement (1) for operating an electrical facility of the rail-operated vehicle and with waste heat utilization, wherein the fuel cell arrangement comprises:
- at least one fuel cell (100), which generates electrical energy and heat during operation,
- a generator facility (200) with at least one thermoelectric generator (210), wherein the generator facility (200) is arranged in the fuel cell arrangement (1) so that the at least one thermoelectric generator (210) generates electrical energy from the heat generated by the at least one fuel cell (100),
- a battery (300) for storing the electrical energy generated by the at least one thermoelectric generator (210),
- wherein the battery (300) is connected to an electrical component (600) of the fuel cell arrangement (1),
- wherein the electrical component (100) is embodied to heat the at least one fuel cell (100) to an operating temperature of the at least one fuel cell, in order to operate the at least one fuel cell (100) as intended.

2. Rail-operated vehicle according to claim 1, wherein the fuel cell arrangement (1) comprises:
- a supply line (400) for supplying the heat generated by the at least one fuel cell (100) to the generator facility (200),
- wherein the supply line (400) is arranged between the at least one fuel cell (100) and the generator facility (200) so that the heat generated by the at least one fuel cell (100) is directly supplied to the at least one thermoelectric generator (210) for conversion into electrical energy.

3. Rail-operated vehicle according to one of claims 1 or 2,
- wherein the generator facility (200) has an output connection (A200) for generating a thermoelectric voltage,
- wherein the at least one thermoelectric generator (210) generates the thermoelectric voltage as a function of the heat generated by the at least one fuel cell (100) at the output connection (A200).

4. Rail-operated vehicle according to claim 3,
wherein the output connection (A200) of the generator facility (200) is connected to the battery (300).

5. Rail-operated vehicle according to one of claims 1 to 4, wherein the generator facility (200) is embodied to generate a charging current (IL) for charging the battery (300) as a function of the heat generated by the at least one fuel cell (100) .

6. Rail-operated vehicle according to one of claims 2 to 5, wherein the generator facility (200) is embodied so that the at least one thermoelectric generator (210) is surrounded on a first side (201) by a coolant line (500) for guiding a coolant and on an opposing second side (202) by the supply line (400).

7. Rail-operated vehicle according to claim 6,
wherein the generator facility (200) is embodied to generate the thermoelectric voltage at the output connection (A200) as a function of a temperature difference between the first side (201) and second side (202) of the at least one thermoelectric generator (210).

8. Rail-operated vehicle according to one of claims 1 to 7,
- wherein the generator facility (200) has a plurality of the at least one thermoelectric generator (210, 220, 230),
- wherein the thermoelectric generators (210, 220, 230) are connected in series.

9. Rail-operated vehicle according to claim 1,
wherein the coolant line (500) is embodied as a coolant line of the rail-operated vehicle.

10. Rail-operated vehicle according to claim 1,
wherein the electrical energy stored in the battery (300) of the fuel cell arrangement (1) is used to assist with the electrical supply to auxiliary converter units of the rail-operated vehicle.

11. Rail-operated vehicle according to one of claims 1 or 10, wherein the electrical energy stored in the battery (300) of the fuel cell arrangement (1) is supplied to an onboard electrical battery of the rail-operated vehicle.

## Revendications

1. Véhicule sur rail comprenant un équipement (1) de pile à combustible pour l'alimentation d'un dispositif électrique du véhicule sur rail et avec l'utilisation de chaleur perdue, dans lequel l'équipement de pile à combustible comprend :
- au moins une pile (100) à combustible, qui en fonctionnement produit de l'énergie électrique et de la chaleur,
- un dispositif (200) à générateur ayant au moins un générateur (210) thermoélectrique, dans lequel le dispositif (200) à générateur est disposé dans l'équipement (1) de pile à combustible de manière à ce que le au moins un générateur (210) thermoélectrique produise une énergie électrique à partir de la chaleur produite par la au moins une pile (100) à combustible,
- une batterie (300) d'accumulation de l'énergie électrique produite par le au moins un générateur (210) thermoélectrique,
- dans lequel la batterie (300) est connectée à un composant (600) électrique de l'équipement (1) de pile à combustible,
- dans lequel le composant (600) électrique est constitué pour porter la au moins une pile (100) à combustible à une température de fonctionnement d'au moins une pile à combustible afin de faire fonctionner la au moins une pile (100) à combustible suivant un fonctionnement conforme aux prescriptions.

2. Véhicule sur rail suivant la revendication 1, dans lequel l'équipement (1) de pile à combustible comprend :
- un conduit (400) d'amenée pour amener au dispositif (200) à générateur la chaleur produite par la au moins une pile (100) à combustible,
- dans lequel le conduit (400) d'amenée est disposé entre la au moins une pile (100) à combustible et le dispositif (200) à générateur de manière à ce que la chaleur produite par la au moins une pile (100) à combustible soit amenée directement au au moins un générateur (210) thermoélectrique pour la transformation en énergie électrique.

3. Véhicule sur rail suivant l'une des revendications 1 ou 2,
- dans lequel le dispositif (200) à générateur a une borne (A200) de sortie pour la production d'une tension thermoélectrique,
- dans lequel le au moins un générateur (210) thermoélectrique produit, en fonction de la chaleur produite par la au moins une pile (100) à combustible, la tension thermoélectrique à la borne (A200) de sortie.

4. Véhicule sur rail suivant la revendication 3,
dans lequel la borne (A200) de sortie du dispositif (200) à générateur est connectée à la batterie (300).

5. Véhicule sur rail suivant l'une des revendications 1 à 4, dans lequel le dispositif (200) à générateur est constitué pour produire, en fonction de la chaleur produite par la au moins une pile (100) à combustible, un courant (IL) de charge pour la charge de la batterie (300).

6. Véhicule sur rail suivant l'une des revendications 2 à 5, dans lequel le dispositif (200) à générateur est constitué de manière à ce que le au moins un générateur (210) thermoélectrique soit entouré, d'un premier côté (201), d'un conduit (500) de réfrigérant pour la conduite d'un réfrigérant et, d'un deuxième côté (202) opposé, du conduit (400) d'amenée.

7. Véhicule sur rail suivant la revendication 6,
dans lequel le dispositif (200) à générateur est constitué pour produire la tension thermoélectrique à la borne (A200) de sortie en fonction d'une différence de température entre le premier côté (201) et le deuxième côté (202) du au moins un générateur (210) thermoélectrique.

8. Véhicule sur rail suivant l'une des revendications 1 à 7,
- dans lequel le dispositif (200) à générateur a une pluralité du au moins un générateur (210, 220, 230) thermoélectrique,
- dans lequel les générateurs (210, 220, 230) thermoélectriques sont montés en série.

9. Véhicule sur rail suivant la revendication 1,
dans lequel le conduit (500) d'agent réfrigérant est constitué sous la forme d'un conduit d'agent réfrigérant du véhicule sur rail.

10. Véhicule sur rail suivant la revendication 1,
dans lequel l'énergie électrique accumulée dans la batterie (300) de l'équipement (1) de pile à combustible est utilisée pour soutenir l'alimentation en énergie électrique de convertisseurs de fonctionnement auxiliaire du véhicule sur rail.

11. Véhicule sur rail suivant l'une des revendications 1 ou 10, dans lequel l'énergie électrique accumulée dans la batterie (300) de l'équipement (1) de pile à combustible est envoyée à une batterie de réseau de bord du véhicule sur rail.
